# EUROPÄISCHE PATENTSCHRIFT

(11) **EP 1 100 617 B1**
(45) Veröffentlichungstag und Bekanntmachung des Hinweises auf die Patenterteilung: **06.10.2004**
(21) Anmeldenummer: 99941446.9
(22) Anmeldetag: 20.07.1999
(51) Int. Cl.: B01J 27/26, C08G 65/10, C08G 65/26

(54) **DOPPELMETALLCYANID-KATALYSATOREN FÜR DIE HERSTELLUNG VON POLYETHERPOLYOLEN**
BIMETALLIC-CYANIDE CATALYSTS USED FOR PREPARING POLYETHER POLYOLS
CATALYSEURS DE CYANURE BIMETALLIQUE UTILISES POUR PREPARER DES POLYOLS DE POLYETHER

(30) Priorität: 31.07.1998 DE 19834572
(43) Veröffentlichungstag der Anmeldung: 23.05.2001
(73) Patentinhaber: Bayer MaterialScience AG, 51368 Leverkusen (DE)
(72) Erfinder: OOMS, Pieter, D-47800 Krefeld (DE); HOFMANN, Jörg, D-47829 Krefeld (DE); GUPTA, Pramod, D-50181 Bedburg (DE); SCHÄFER, Walter, D-42799 Leichlingen (DE)
(86) Internationale Anmeldenummer: PCT/EP1999/005149
(87) Internationale Veröffentlichungsnummer: WO 2000/007720

(56) Entgegenhaltungen:
- EP-A- 0 090 444
- US-A- 5 627 120
- US-A- 5 714 428

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wäßrige Lösung eines Metallsalzes mit der wäßrigen Lösung eines Metallcyanidsalzes in Gegenwart eines organischen Komplexliganden, z.B. eines Ethers, umsetzt. In einer typischen Katalysatorpräparation werden beispielsweise wäßrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wäßriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP 700 949).

Aus JP 4 145 123, US 5 470 813, EP 700 949, EP 743 093, EP 761 708 und WO 97/40086 sind DMC-Katalysatoren bekannt, die durch Einsatz von tert.-Butanol als organischem Komplexliganden (allein oder in Kombination mit einem Polyether (EP 700 949, EP 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

US 5 714 428 beschreibt DMC-Katalysatoren, die neben tert.-Butanol noch Kohlenhydrate wie Stärke enthalten.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, daß die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, daß DMC-Katalysatoren, die ein Alkylpolyglycosid als Komplexliganden enthalten, bei der Polyetherpolyol-Herstellung stark erhöhte Aktivität besitzen.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung,
b) einen oder mehrere, vorzugsweise einen, von c) verschiedenen organischen Komplexliganden, und
c) ein oder mehrere, vorzugsweise ein, Alkylpolyglycosid.

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y sind gleich oder verschieden, vorzugsweise gleich, und ein Alkalimetallion oder ein Erdalkalimetallion. A sind gleich oder verschieden, vorzugsweise gleich, und ein Anion, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, daß die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z} ,

worin M wie in Formel (I) und
M' wie in Formel (II) definiert ist, und
x, x', y und z sind ganzzahlig und so gewählt, daß die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (siehe z.B. US 5 158 922 insbesondere Spalte 6, Zeilen 9 - 65, US 3 404 109, US 3 829 505, US 3 941 849, EP 700 949, EP 761 708, JP 4 145 123, US 5 470 813, EP 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30, bevorzugt 1 bis 25 Gew.-%, bezogen auf die Menge des fertigen Katalysators. Die erfindungsgemäßen DMC-Katalysatoren enthalten üblicherweise 5 - 80 Gew.-%, bevorzugt 10 bis 60 Gew.-%, bezogen auf die Menge des fertigen Katalysators, an Glycosid.

Für die Herstellung der erfindungsgemäßen Katalysatoren geeignete Glycoside sind Verbindungen aufgebaut aus Kohlenhydraten (Zuckern) und Nichtzuckern (Aglykone), in denen das Aglykon durch ein Sauerstoff-Atom über eine glykosidische Bindung mit einem Halbacetal-C-Atom des Kohlenhydrats zum Vollacetal gebunden ist.
Als Zuckerkomponente geeignet sind Monosaccharide wie Glucose, Galactose, Mannose, Fructose, Arabinose, Xylose oder Ribose, Disaccharide wie Saccharose oder Maltose und Oligo- oder Polysaccharide wie Stärke.
Als Nichtzuckerkomponente kommen C₁-C₃₀-Kohlenwasserstoffreste wie Aryl-, Aralkyl- und Alkylreste, bevorzugt Aralkyl- und Alkylreste, besonders bevorzugt Alkylreste mit 1 bis 30 C-Atomen in Frage.
Eingesetzte Glycoside sind die sogenannten Alkylpolyglycoside, die in der Regel durch Reaktion von Kohlenhydraten mit Alkoholen wie Methanol, Ethanol, Propanol und Butanol oder durch Umacetalisierung von kurzkettigen Alkylglycosiden mit Fettalkoholen mit 8 bis 20 C-Atomen in Gegenwart von Säuren erhalten werden.
Besonders bevorzugt sind Alkylpolyglycoside mit Glucose als wiederkehrender Einheit in der Kette, mit Alkylkettenlängen von C₈ bis C₁₆ und mittleren Polymerisationsgraden zwischen 1 und 2.

Methoden zur Herstellung von Glycosiden sind allgemein gut bekannt und beispielsweise ausführlich beschrieben in "Kirk-Othmer, Encyclopedia of Chemical Technology", Band 4, 4. Auflage, 1992, S. 916 ff.; "Römpp, Lexikon Chemie", 10. Auflage, Stuttgart/New York, 1996; Angewandte Chemie 110, S. 1394-1412 (1998).

Es können auch beliebige Mischungen der vorgenannten Alkylpolyglycoside eingesetzt werden.

Die Analyse der Katalysatorzusammensetzung erfolgt üblicherweise mittels Elementaranalyse, Thermogravimetrie oder extraktiver Entfernung des Alkylpolyglycosidanteils mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind erfindungsgemäße Katalysatoren enthaltend
a) Zinkhexacyanocobaltat (III),
b) tert.-Butanol und
c) ein Alkylpolyglycosid.

Die Herstellung der erfindungsgemäßen DMC-Katalysatoren erfolgt üblicherweise in wäßriger Lösung durch Umsetzung von α) Metallsalzen, insbesondere der Formel (I) mit Metallcyanidsalzen insbesondere der Formel (II) β) von organischen Komplexliganden b), die von Glycosid verschieden sind und γ) Alkylpolyglycosid.

Bevorzugt werden dabei zunächst die wäßrigen Lösungen des Metallsalzes (z.B. Zinkchlorid, eingesetzt im stöchiometrischen Überschuß (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wäßrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wäßrigen Lösungen und den organischen Komplexliganden b) unter starkem Rühren zu vermischen. Die gebildete Suspension wird üblicherweise anschließend mit dem Alkylpolyglycosid c) behandelt. Das Glycosid c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wäßrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wäßrigen Waschlösung zwischen 40 und 80 Gew.-%, bezogen auf die Gesamtlösung. Weiterhin ist es vorteilhaft, der wäßrigen Waschlösung etwas Alkylpolyglycosid, bevorzugt im Bereich zwischen 0,5 und 5 Gew.-%, bezogen auf die Gesamtlösung, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nicht wäßrige Lösungen zu verwenden, z.B. eine Mischung aus organischem Komplexliganden und Alkylpolyglycosid.

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", englisch-sprachige Ausgabe, 1992, Band A21, Seiten 670 - 671, zu entnehmen.

Als aktive Wasserstoffatome aufweisende Starterverbindungen werden vorzugsweise Verbindungen mit Molekulargewichten von 18 bis 2000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die Molekulargewichte der nach dem erfindungsgemäßen Verfahren hergestellten Polyetherpolyole liegen im Bereich von 500 bis 100000 g/mol, bevorzugt im Bereich von 1000 bis 50000 g/mol, besonders bevorzugt im Bereich von 2000 bis 20000 g/mol.

Die Polyaddition kann kontinuierlich oder diskontinuierlich, z.B. in einem Batchoder im Semibatchverfahren durchgeführt werden.

Durch Einsatz der erfindungsgemäßen DMC-Katalysatoren werden die Alkoxylierungszeiten bei der Polyetherpolyol-Herstellung im Vergleich zu bislang bekannten DMC-Katalysatoren mit tert.-Butanol und Stärke als Liganden um typischerweise 55-85% reduziert. Die Induktionszeiten bei der Polyetherpolyol-Herstellung werden typischerweise um 25-50 % reduziert. Dies führt zu einer Verkürzung der Gesamtreaktionszeit der Polyetherpolyol-Herstellung und damit zu einer verbesserten Wirtschaftlichkeit des Prozesses.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl., 1993, S. 25-32 und 57-67), kann auf eine Entfernung des Katalysators aus dem Polyetherpolyol verzichtet werden, ohne daß die Produktqualitäten des erhaltenen Polyurethans nachteilig beeinflußt werden.

Die nachfolgenden Beispiele erläutern die Erfindung, haben jedoch keinerlei limitierenden Charakter.

### Beispiele

### Katalysatorpräparation

### Beispiel 1

Herstellung eines DMC-Katalysators mit Einsatz eines C₈₋₁₄-Alkylpolyglucosids (Katalysator A).

Zu einer Lösung aus 4 g (12 mmol) Kaliumhexacyanocobaltat in 70 ml destilliertem Wasser gibt man unter starkem Rühren (24000 U/min) eine Lösung aus 12,5 g (91,5 mmol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24 000 U/min). Dann wird eine Mischung aus 1 g eines C₈₋₁₄-Alkylpolyglucosids ®Glucopon 650 EC (Firma Henkel), 1 g tert.-Butanol und 100 g destilliertem Wasser zugegeben und 3 min gerührt (1 000 U/min). Der Feststoff wird durch eine Filtration isoliert, dann 10 min mit einer Mischung aus 70 g tert.-Butanol, 30 g destilliertem Wasser und 1 g des obigen Alkylpolyglucosids gerührt (10 000 U/min) und erneut filtriert. Abschließend wird noch einmal 10 min mit einer Mischung aus 100 g tert.-Butanol und 0,5 g des obigen Alkylpolyglucosids gerührt (10 000 U/min). Nach Filtration wird der Katalysator bei 50°C und Normaldruck bis zur Gewichtskonstanz getrocknet.

Ausbeute an getrocknetem, pulverförmigem Katalysator: 4,9 g

Elementaranalyse, Thermogravimetrische Analyse und Extraktion:
Cobalt = 12,0 %, Zink = 27,0 %, tert.-Butanol + Alkylpolyglucosid = 33,2 %

### Beispiel 2

Herstellung eines DMC-Katalysators mit Einsatz eines C₁₂₋₁₄-Alkylpolyglucosids (Katalysator B).

Es wurde verfahren wie in Beispiel 1, jedoch wurde als Alkylpolyglycosid C₁₂₋₁₄-Alkylpolyglucosid ®Glucopon 600 CS UP (Firma Henkel) anstelle des Alkylpolyglucosids aus Beispiel 1 eingesetzt.

Ausbeute an getrocknetem, pulverförmigem Katalysator: 4,6 g

Elementaranalyse, Thermogravimetrische Analyse und Extraktion: Cobalt = 10,8 %, Zink = 21,7 %, tert.-Butanol = 12,5 %, Alkylpolyglucosid = 19,0 %

### Beispiel 3

Herstellung eines DMC-Katalysators mit Einsatz eines C₈₋₁₀-Alkylpolyglucosids (Katalysator C).

Es wurde verfahren wie in Beispiel 1, jedoch wurde als Alkylpolyglycosid C₈₋₁₀-Alkylpolyglucosid ®Glucopon 215 CS UP (Firma Henkel) anstelle des Alkylpolyglucosids aus Beispiel 1 eingesetzt.

Ausbeute an getrocknetem, pulverförmigem Katalysator: 4,2 g

Elementaranalyse, Thermogravimetrische Analyse und Extraktion:
Cobalt = 11,5 %, Zink = 22,3 %, tert.-Butanol = 9,2 %, Alkylpolyglucosid = 20,4 %

### Vergleichsbeispiel 4

Herstellung eines DMC-Katalysators mit Einsatz von Stärke (Katalysator D, Synthese gemäß US 5 714 428).

Zu einer Lösung aus 4 g (12 mmol) Kaliumhexacyanocobaltat in 70 ml destilliertem Wasser gibt man unter starkem Rühren (24 000 U/min) eine Lösung aus 12,5 g (91,5 mmol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24 000 U/min). Dann wird eine Mischung aus 1 g Stärke (Firma Aldrich), 1 g tert.-Butanol und 100 g destilliertem Wasser zugegeben und 3 min gerührt (1 000 U/min). Der Feststoff wird durch eine Filtration isoliert, dann 10 min mit einer Mischung aus 70 g tert.-Butanol, 30 g destilliertem Wasser und 1 g Stärke gerührt (10 000 U/min) und erneut filtriert. Abschließend wird noch einmal 10 min mit einer Mischung aus 100 g tert.-Butanol und 0,5 g Stärke gerührt (10 000 U/min). Nach Filtration wird der Katalysator bei 50°C und Normaldruck bis zur Gewichtskonstanz getrocknet.

Ausbeute an getrocknetem, pulverförmigem Katalysator: 6,70 g

Elementaranalyse, Thermogravimetrische Analyse und Extraktion: Cobalt = 8,2 %, Zink = 19,7 %, tert.-Butanol = 7,0 %, Stärke = 35,8 %

### Herstellung von Polyetherpolyolen

### Allgemeine Durchführung

In einem 500 ml Druckreaktor werden 50 g Polypropylenglykol-Starter (Molekulargewicht = 1 000 g/mol) und 4 - 20 mg Katalysator (20 - 100 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 5

Herstellung von Polyetherpolyol mit Katalysator A (100 ppm)

| | | |
|---|---|---|
| Induktionszeit | | 130 min |
| Propoxylierungszeit | | 45 min |
| Gesamtreaktionszeit | | 175 min |
| Polyetherpolyol | OH-Zahl (mg KOH/g) | 29,3 |
| | Doppelbindungsgehalt (mMo(/kg) | 6 |
| | Viskosität 25°C (mPas) | 887 |

### Beispiel 6

Herstellung von Polyetherpolyol mit Katalysator B (100 ppm)

| | | |
|---|---|---|
| Induktionszeit | | 160 min |
| Propoxylierungszeit | | 70 min |
| Gesamtreaktionszeit | | 230 min |
| Polyetherpolyol | OH-Zahl (mg KOH/g) | 29,7 |
| | Doppelbindungsgehalt (mMol/kg) | 9 |
| | Viskosität 25°C (mPas) | 869 |

### Beispiel 7

Herstellung von Polyetherpolyol mit Katalysator C (100 ppm)

| | | |
|---|---|---|
| Induktionszeit | | 170 min |
| Propoxylierungszeit | | 120 min |
| Gesamtreaktionszeit | | 290 min |
| Polyetherpolyol | OH-Zahl (mg KOH/g) | 28,7 |
| | Doppelbindungsgehalt (mMol/kg) | 5 |
| | Viskosität 25°C (mPas) | 948 |

### Vergleichsbeispiel 8

Herstellung von Polyetherpolyol mit Katalysator D (100 ppm)

| | | |
|---|---|---|
| Induktionszeit | | 235 min |
| Propoxylierungszeit | | 280 min |
| Gesamtreaktionszeit | | 515 min |
| Polyetherpolyol | OH-Zahl (mg KOH/g) | 29,3 |
| | Doppelbindungsgehalt (mMol/kg) | 13 |
| | Viskosität 25°C (mPas) | 859 |

Ein Vergleich zwischen den Beispielen 5 - 7 und dem Vergleichsbeispiel 8 macht deutlich, daß bei der Herstellung von Polyetherpolyolen mit den erfindungsgemäßen, einen organischen Komplexliganden (tert.-Butanol) und ein Alkylpolyglycosid enthaltenden DMC-Katalysatoren im Vergleich zu einem DMC-Katalysator, der einen organischen Komplexliganden (tert.-Butanol) und Stärke enthält (beschrieben in US 5 714 428), deutlich reduzierte Induktionszeiten auftreten, und daß die erfindungsgemäßen Katalysatoren gleichzeitig stark erhöhte Aktivität besitzen (erkennbar an den wesentlich. verkürzten Propoxylierungszeiten). Zudem sind die Doppelbindungsgehalte der mit den erfindungsgemäßen Katalysatoren erhaltenen Polyole stark reduziert.

### Beispiel 9

Herstellung von Polyetherpolyol mit Katalysator A (20 ppm)

| | | |
|---|---|---|
| Induktionszeit | | 350 min |
| Propoxylierungszeit | | 355 min |
| Gesamtreaktionszeit | | 705 min |
| Polyetherpolyol | OH-Zahl (mg KOH/g) | 29,6 |
| | Doppelbindungsgehalt (mMol/kg) | 6 |
| | Viskosität 25°C (mPas) | 1013 |

Ohne Entfernung des Katalysators beträgt der Metallgehalt im Polyol: Zn = 5 ppm, Co = 2 ppm.

Beispiel 9 zeigt, daß die neuen, erfindungsgemäßen DMC-Katalysatoren aufgrund ihrer deutlich erhöhten Aktivität bei der Polyetherpolyol-Herstellung in so geringen Konzentrationen eingesetzt werden können, daß auf eine Abtrennung des Katalysators aus dem Polyol verzichtet werden kann.

## Patentansprüche

1. Doppelmetallcyanid (DMC)-Katalysator enthaltend
a) eine oder mehrere Doppelmetallcyanid-Verbindungen,
b) einen oder mehrere, von c) verschiedene, organische Komplexliganden, und
c) ein oder mehrere Alkylpolyglycosid(e).

2. DMC-Katalysator nach Anspruch 1, zusätzlich enthaltend d) Wasser und/oder e) wasserlösliches Metallsalz.

3. DMC-Katalysator nach Anspruch 1 oder 2, worin die Doppelmetallcyanid-Verbindung Zinkhexacyanocobaltat(III) ist.

4. DMC-Katalysator nach einem der Ansprüche 1 bis 3, worin der organische Komplexligand tert.-Butanol ist.

5. DMC-Katalysator nach einem der Ansprüche 1 bis 4, worin der Katalysator 5 bis 80 Gew.-%, vorzugsweise 10 bis 60 Gew.-% eines Glycosids enthält.

6. Verfahren zur Herstellung eines DMC-Katalysators nach einem der Ansprüche 1 bis 5, enthaltend die Schritte:
i) Umsetzung in wäßriger Lösung von
α) Metallsalzen mit Metallcyanidsalzen
β) organischen Komplexliganden, die von Alkylpolyglycosid verschieden sind, und
γ) Alkylpolyglycosid
ii) Isolierung, Waschen und Trocknen des in Schritt i) erhaltenen Katalysators.

7. Verwendung eines oder mehrerer DMC-Katalysatoren nach einem der Ansprüche 1 bis 5, zur Herstellung von Polyetherpolyolen durch Polyaddition von Alkylenoxiden an aktive Wasserstoffatome aufweisende Starterverbindungen.

## Claims

1. Double metal cyanide (DMC) catalyst containing
a) one or more double metal cyanide compounds,
b) one or more organic complex ligands other than c), and
c) one or more alkyl polyglycoside(s).

2. DMC catalyst according to claim 1, additionally containing d) water and/or e) water-soluble metal salt.

3. DMC catalyst according to claim 1 or 2, wherein the double metal cyanide compound is zinc hexacyanocobaltate(III).

4. DMC catalyst according to any one of claims 1 to 3, wherein the organic.complex ligand is tert.-butanol.

5. DMC catalyst according to any one of claims 1 to 4, wherein the catalyst contains from 5 to 80 wt.%, preferably from 10 to 60 wt.%, of a glycoside.

6. Process for the preparation of a DMC catalyst according to any one of claims 1 to 5, comprising the steps:
i) reacting in aqueous solution
α) metal salts with metal cyanide salts,
β) organic complex ligands other than alkyl polyglycoside, and
γ) alkyl polyglycoside,
ii) isolating, washing and drying the catalyst obtained in step i).

7. Use of one or more DMC catalysts according to any one of claims 1 to 5 for the preparation of polyether polyols by polyaddition of alkylene oxides to starter compounds having active hydrogen atoms.

## Revendications

1. Catalyseur de cyanure métallique double (DMC) contenant :
a) un ou plusieurs composés de cyanure métallique double,
b) un ou plusieurs ligands de complexe organique différents de c), et
c) un ou plusieurs alkylpolyglycosides.

2. Catalyseur DMC selon la revendication 1, contenant en outre d) de l'eau et/ou e) un sel métallique hydrosoluble.

3. Catalyseur DMC selon la revendication 1 ou 2, où le composé de cyanure métallique double est l'hexacyanocobaltate de zinc(III).

4. Catalyseur DMC selon l'une des revendications 1 à 3, où le ligand de complexe organique est le tert-butanol.

5. Catalyseur DMC selon l'une des revendications 1 à 4, où le catalyseur contient 5 à 80 % en masse, de préférence 10 à 60 % en masse d'un glycoside.

6. Procédé de préparation d'un catalyseur DMC selon l'une des revendications 1 à 5, contenant les étapes :
i) réaction en solution aqueuse
α) de sels métalliques avec des sels de cyanures métalliques,
β) de ligands de complexe organiques qui sont différents d'un alkylpolyglycoside, et
γ) d'un alkylpolyglycoside,
ii) isolement, lavage et séchage du catalyseur obtenu dans l'étape i).

7. Utilisation d'un ou plusieurs catalyseurs DMC selon l'une des revendications 1 à 5 pour la préparation de polyétherpolyols par polyaddition d'oxydes d'alkylène sur des composés starters comportant des atomes d'hydrogènes actifs.
